# EUROPEAN PATENT APPLICATION

(11) **EP 1 834 836 A1**
(43) Date of publication of application: **19.09.2007**
(21) Application number: 07103822.8
(22) Date of filing: 09.03.2007
(51) Int. Cl.: B60Q 3/02, E06B 3/66

(54) **Window glass structure**

(30) Priority: 15.03.2006 FI 20065169
(71) Applicant: Teknoware Oy, 15200 Lahti (FI)
(72) Inventor: Järvi, Markus, 15240, Lahti (FI)
(74) Representative: Savolainen, Seppo Kalevi

(57) **Abstract**

The invention relates to a window glass structure comprising two glass sheets (1) spaced apart from one another and an interposed support strip structure (2) to which the glass sheets are glued to provide an enclosed structure, the glass sheets (1) and the support strip structure (2) thus defining a space (4) having at least one light source (5) arranged therein.

## Description

### BACKGROUND OF THE INVENTION

The invention relates to a window glass structure comprising two glass sheets spaced apart from one another and an interposed support strip structure to which the glass sheets are glued to provide an enclosed structure. This type of structure is commonly referred to as a multiple glass unit and it has various applications, for example in vehicles.

Public service vehicles are often provided with aisle lights, reading lights, night lights and other similar lightning structures that need to be protected as well as possible and installed in carefully chosen locations. Prior art knows various alternatives for surface and flush mounting of luminaires to the inner surfaces, such as walls, windows, ceiling, floor, seat, etc., of a vehicle. Luminaires for windows in particular are installed separately, after the actual window manufacturing process. In these cases different solutions for mounting the luminaires to the window surface inside the vehicle may be used.

Prior art lighting solutions involve problems as regards utilization of and design of the inner space of vehicles.

### SUMMARY OF THE INVENTION

A particular object of the present invention is to provide a new solution for the inner lighting of vehicles, starting from the actual window glass structure. This is achieved by a window glass structure of the invention, characterized in that at least one light source is arranged into a space defined by the glass sheets and the support strip structure.

The invention is thus based on a lighting solution installed into an inner space enclosed by the glass sheets and the support strip structure joining the sheets, whereby the lighting structure does not occupy any space outside the window and therefore is particularly well protected. At the same time the lighting structure may also form a part of the window glass structure. The illumination provided by the light source is also visible to the outside of the installation location.

A noteworthy aspect of the invention is that nothing prevents using this type of window glass structure also elsewhere than in vehicles, if this type of illumination is needed.

The light source may be fastened to an inner side of the support strip between the window glasses. It is also possible to use a support strip made of a transparent material, in which case the light source may be installed inside the support strip. Yet another possibility is to attach the light source to either of the glass surfaces in the interspace, whereby its location and shape can be freely determined. However, it should be taken into account that if the light source is inside the window glass structure, the entire glass must be replaced in case the light source is damaged. Then again, when the light source is inside the support strip, only the damaged light source needs to be changed. Of course it is also possible to make a hole into the support strip, whereby the protective tube can be pulled out between the glass sheets and the light source can be changed through the end of the tube.

Suitable light sources include end-illuminated optical fibres, LEDs installed onto a circuit board, incandescent bulbs or fluorescent tubes.

### LIST OF FIGURES

In the following the invention will be described in greater detail with reference to a few preferred embodiments used as examples and to the accompanying drawings, in which
Figure 1 is cross-sectional view of a window glass structure of the invention;
Figure 2 is a cross-sectional view of another window glass structure of the invention; and
Figure 3 is a cross-sectional view of yet another window glass structure of the invention.

### DETAILED DISCLOSURE OF THE INVENTION

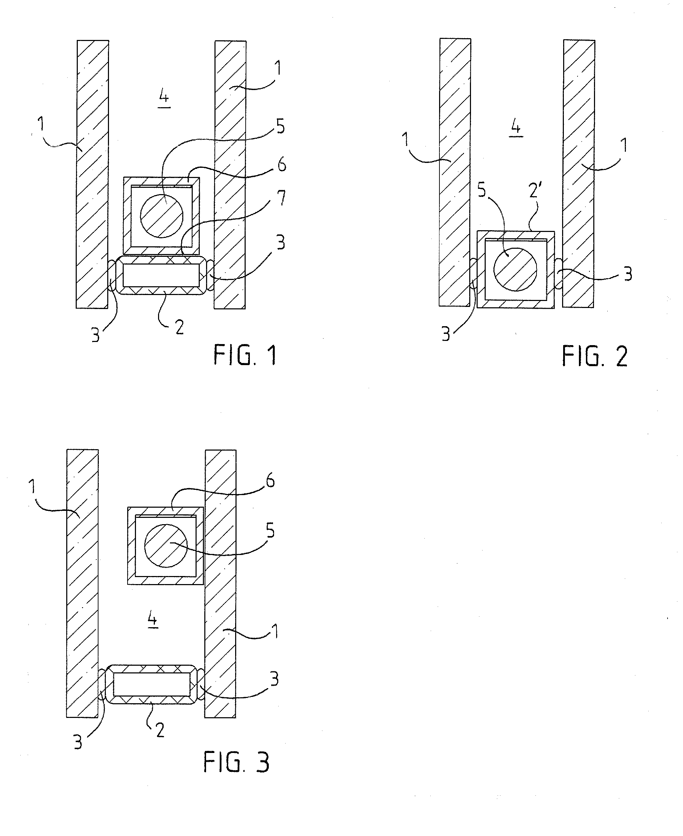

Figure 1 shows a window glass structure comprising two glass sheets 1 spaced apart from one another and with a support strip structure 2 arranged between them in the vicinity of the edges of the glass sheets, whereby an enclosed frame structure is formed around the window glass structure, the glass sheets being glued to the frame structure by means of glue beads 3. An enclosed and sealed window structure is thus provided. This type of two-layer glass having an isolating inner air space is also referred to as a multiple glass unit.

According to the invention the inner space 4 defined by the glass sheets 1 and the support strip structure 2 (and which in connection with Figure 2 is also considered to include the inner space of the support strip structure) is provided with a light source 5 installed before the window structure is assembled and glued together. In this example the light source is arranged into a protective tube 6, the protective tube 6 being then fastened to an inner side 7 of the support strip 2. The protective tube 6 may be attached to the support strip structure 2 by gluing, for example, similarly as the glass sheets 1.

The light source 5 may be selected among end-illuminated optical fibres, LEDs installed onto a circuit board, incandescent bulbs or fluorescent tubes, for example. In the case of Figure 1 optical fibres or LEDs, which offer a long service life, are the most preferred.

Alternatively, the light source 5 may be installed inside a support strip 2', as shown in Figure 2, in which case the support strip 2' must be of a transparent material. In fact, the support strip may be for example the protective tube shown in Figure 2, in which case a separate protective tube around the light source 5 is not needed. Compared with the previous solution, this has the advantage that a broken light source 5 can be changed without having to replace the entire glass structure. The light source 5 may be changed for example through a hole or an opening strip provided on the outer surface of the support strip 2'. This arrangement is most suitable for example when solutions offering a shorter service life, such as incandescent lights or fluorescent tubes, are to be used as the light source 5.

The solution of Figure 3 differs from the others disclosed above mainly only in that the light source 5 is attached to the inner surface of the other glass sheet 1 in the space 4. In this case a similar protective tube 6 and the gluing thereof can be used as in Figure 1.

The above specification is only meant to illustrate the basic idea of the invention. A person skilled in the art may therefore implement the details of the invention in various other ways within the scope of the claims.

## Claims

1. A window glass structure comprising two glass sheets (1) spaced apart from one another and having an interposed support strip structure (2; 2') to which the glass sheets are glued to provide an enclosed structure, **characterized in that** at least one light source (5) is arranged into a space (4) defined by the glass sheets (1) and the support strip structure (2; 2').

2. A window glass structure according to claim 1, **characterized in that** the light source (5) is attached to a side (7) of a support strip (6).

3. A window glass structure according to claim 1, **characterized in that** the support strip (2') is of a transparent material and that the light source (5) is attached inside the support strip.

4. A window glass structure according to claim 1, **characterized in that** the light source (5) inside the space (4) is attached to the inner surface of the glass sheet (1).

5. A window glass structure according to any one of claims 1 to 4, **characterized in that** the light source (5) is an end-illuminated optical fibre.

6. A window glass structure according to any one of claims 1 to 4, **characterized in that** the light source (5) consists of LEDs mounted onto a circuit board.

7. A window glass structure according to any one of claims 1 to 4, **characterized in that** the light source (5) is an incandescent bulb.

8. A window glass structure according to any one of claims 1 to 4, **characterized in that** light source (5) is a fluorescent tube.
